# FASCICULE DE BREVET EUROPEEN

(11) **EP 0 526 353 B1**
(45) Date de publication et mention de la délivrance du brevet: **08.11.1995**
(21) Numéro de dépôt: 92420242.7
(22) Date de dépôt: 21.07.1992
(51) Int. Cl.: B29C 70/44, B29C 44/12, A63C 5/12

(54) **Procédé pour la fabrication d'une structure moulée complexe, et notamment d'un ski, et structure ainsi obtenue**
Verfahren zur Herstellung einer geformten komplexen Struktur, insbesondere ein Ski, und so erhaltene Struktur
Method for manufacturing a complex moulded structure, especially a ski, and structure obtained with such a method

(30) Priorité: 31.07.1991 FR 9109970
(43) Date de publication de la demande: 03.02.1993
(73) Titulaire: SKIS ROSSIGNOL S.A., F-38509 Voiron Cédex (FR)
(72) Inventeur: Bauvois Jean, F-38250 Villars de Lans (FR)
(74) Mandataire: Laurent, Michel

(56) Documents cités:
- EP-A- 0 428 885
- EP-A- 0 430 824
- FR-A- 2 424 470

## Description

L'invention concerne un procédé pour la fabrication d'une structure moulée complexe. Elle se rapporte également aux structures moulées complexes, et notamment aux skis ainsi obtenus.

De manière traditionnelle, on entend par "structure moulée complexe", une structure moulée contenant :
- des éléments de rigidification ou de renfort se présentant soit sous forme de fils, soit sous forme de nappes ou encore sous forme de plaques,
- et éventuellement des éléments de protection,
- et/ou des éléments mécaniques divers, tels que par exemple d'amortissement, d'allègement...
- et éventuellement des éléments de décoration.

Dans le cadre de la réalisation de telles structures, l'un des soucis dominants consiste à rechercher un procédé susceptible de permettre une automatisation poussée, tout en optimisant les caractéristiques techniques et mécaniques de la structure finale obtenue.

Parmi les différents procédés connus à ce jour pour la réalisation de telles structures, l'un d'entre eux consiste à utiliser la pression provoquée par l'expansion d'une mousse en matière plastique, notamment en polyuréthane, afin d'obtenir le placage des différents éléments entrant dans la composition de la structure contre les parois intérieures d'un moule en forme (voir par exemple le brevet français FR-A- 2 553 669).

Or, de manière générale, et notamment dans le cadre de l'application aux skis, on utilise fréquemment comme élément de rigidification et/ou de renfort des matériaux textiles sous forme de nappes avantageusement préimprégnées d'une résine sans solvant, qui lors de la réalisation de la structure développe des propriétés adhésives notamment au contact du noyau central.

Or l'utilisation d'un noyau central du type mousse polymérisable en association avec un tel élément de renfort pré-imprégné se heurte à une difficulté majeure : en effet, des phénomènes d'incompatibilité ou au contraire d'affinité surviennent quelque fois entre les éléments constitutifs de la mousse du noyau central et les éléments constitutifs de la résine d'imprégnation du tissu pré-imprégné, conduisant à des altérations locales de la cohésion de la structure, rédhibitoire pour de nombreuses applications et notamment pour le ski. Ces phénomènes peuvent induire des défauts d'adhérence entre ces deux éléments, conduisant à l'obtention d'une structure imparfaite du point de vue de ses propriétés mécaniques.

Dans le document FR-A-1 248 660, on a proposé pour la réalisation d'une telle structure, de procéder à la mise en place d'une chambre à air dans le moule, puis au gonflage de cette chambre à air au moyen d'air comprimé, dont le résultat assure le placage des éléments constitutif de la structure contre les parois du moule, et enfin, à l'injection dans l'espace ainsi ménagé d'une mousse polymérisable. Si certes, ce procédé permet de s'affranchir des inconvénients cités précédemment, en revanche, il requiert au moins deux étapes, à savoir le gonflage de la chambre à air, puis l'injection des réactifs du noyau, donc plus long à mettre en oeuvre et en outre relativement difficilement automatisable.

Dans le même esprit, on a proposé dans le document EP-A-0 430 824 (conforme les préambules des revendications 1 et 7), de mettre en place, préalablement à l'injection des constituants de la mousse de matière plastique constitutive du noyau, et empilée entre le sous-ensemble inférieur et le sous ensemble supérieur, une gaine plastique ou deux membranes, susceptibles de remplir le rôle de barrière entre les résines de préimprégnation et la mousse du noyau.

L'invention pallie ces différents inconvénients. Elle propose un procédé pour la réalisation d'une structure moulée complexe, facilement automatisable, qui s'affranchit de toutes les difficultés liées à l'utilisation de produits incompatibles entre eux.

Ce procédé pour la fabrication d'une structure moulée complexe, constituée par un noyau de mousse en matière plastique et sur sa périphérie par deux demi-enveloppes respectivement supérieure et inférieure, consiste :
- à déposer dans un moule un premier élément destiné à former la demi-enveloppe inférieure,
- à déposer sur ce premier élément un élément tubulaire déformable,
- à déposer sur cet élément tubulaire un second élément destiné à former la demi-enveloppe supérieure,
- à fermer le moule,
- à injecter dans l'élément tubulaire déformable des réactifs destinés à réagir pour former une mousse qui s'expanse in-situ jusqu'à venir plaquer les deux demi-enveloppes contre les parois du moule,
- à refroidir le contenu du moule,
- et enfin à ouvrir le moule pour retirer la structure moulée complexe ainsi obtenue.

Ce procédé se caractérise en ce que la partie supérieure de l'élément tubulaire déformable est rigide.

En d'autres termes, l'invention consiste à introduire préalablement à l'injection des réactifs constitutifs de la mousse de matière plastique, une barrière intermédiaire entre les demi-enveloppes respectivement inférieure et supérieure et le noyau de la structure, barrière dont la partie supérieure est constituée d'un élément de renfort rigide, destiné sous l'action de l'expansion de la mousse de matière plastique à venir se plaquer contre la demi-enveloppe supérieure, et à favoriser le placage de la demi-enveloppe supérieure contre la paroi du moule. Cette barrière, outre son rôle d'étanchéité entre les résines d'imprégnation des demienveloppes supérieure et inférieure et la mousse de matière plastique du noyau doit également développer de bonnes propriétés d'adhérence avec les éléments qu'elle sépare.

Selon une forme avantageuse de l'invention, l'élément tubulaire est fermé. En d'autres termes, il est constitué d'une plaque rigide supérieure, la fermeture de l'élément étant réalisé par une même enveloppe souple déformable, et étirable, solidarisée au niveau des deux bords latéraux de ladite plaque, et ce par tout moyen, notamment par collage, soudage, pincement, clipsage, boutonnage, préalablement à son introduction dans le moule.

Dans une autre forme de réalisation de l'invention, la partie supérieure et la partie inférieure de l'élément tubulaire sont constituées de plaques rigides. Ces deux parties sont alors reliées entre elles pour constituer un élément tubulaire fermé par deux éléments souples, déformables et étirables, fixés comme précédemment décrit, au niveau des deux bords latéraux desdites parties.

Cette partie rigide peut être constituée d'une plaque métallique, par exemple en ZICRAL (marque déposée de CEGEDUR), ou d'une plaque de stratifié prépolymérisée donc durcie, ou encore d'une plaque de résine durcie, ou d'une plaque de papier durcie à la résine phénolique ou mélamine, ou d'une feuille de bois déroulée.

Selon l'invention, l'élément souple, extensible et déformable est constitué d'un matériau choisi dans le groupe constitué par les polyuréthanes thermoplastiques, les polyéthers bloc amides et les polyéthers bloc amide modifiés nitriles ou un mélange de ces produits.

L'invention concerne également la structure moulée complexe obtenue par ce procédé, constituée par un noyau de mousse en matière plastique, et sur sa périphéric par deux demi-enveloppes respectivement supérieure et inférieure.

Cette structure se caractérise en ce que le noyau de mousse en matière plastique est séparé des demi-enveloppes respectivement supérieure et inférieure par un élément adhérent à ce dernier et aux deux demi-enveloppes, comportant au moins une plaque supérieure rigide intercalée entre ledit noyau et la demi-enveloppe supérieure, et un film souple sur au moins les deux cotés ou chants de la structure.

La manière dont l'invention peut être réalisée et les avantages qui en découlent ressortiront mieux des exemples de réalisation qui suivent donnés à titre indicatif et non limitatif à l'appui des figures annexées.

La figure 1 est une coupe transversale d'un moule avant fermeture pour la réalisation d'une structure moulée complexe.

La figure 2 est une coupe transversale du moule ci-dessus, après expansion de la mousse.

La figure 3 est une vue schématique d'un détail de la figure 1.

La figure 4 est une vue schématique d'un détail de la figure 5.

La figure 5 est une coupe transversale d'un moule pour la réalisation d'une structure moulée complexe préalablement à l'injection des réactifs constitutifs de la mousse selon une autre forme de réalisation de l'invention.

La figure 6 est une coupe transversale du moule de la figure 5 après expansion de la mousse.

La description concerne la réalisation de skis. Néanmoins, il va de soi que la portée de l'invention ne saurait se limiter à cette seule application.

On dépose à plat et au fond (5) d'un moule défini par ses empreintes respectivement inférieure (1) et supérieure (2), une première demi-enveloppe constituée tout d'abord par une semelle (6), typiquement réalisée en polyéthylène, limitée au niveau de ses bords latéraux par deux carres en acier (7). La semelle (6) est surmontée d'une plaque de renfort mécanique (8), réalisée par exemple en ZICRAL (marque déposée), elle même recouverte d'un élément de renfort (9) constitué par une nappe textile unidirectionnelle pré-imprégnée d'une résine époxyde.

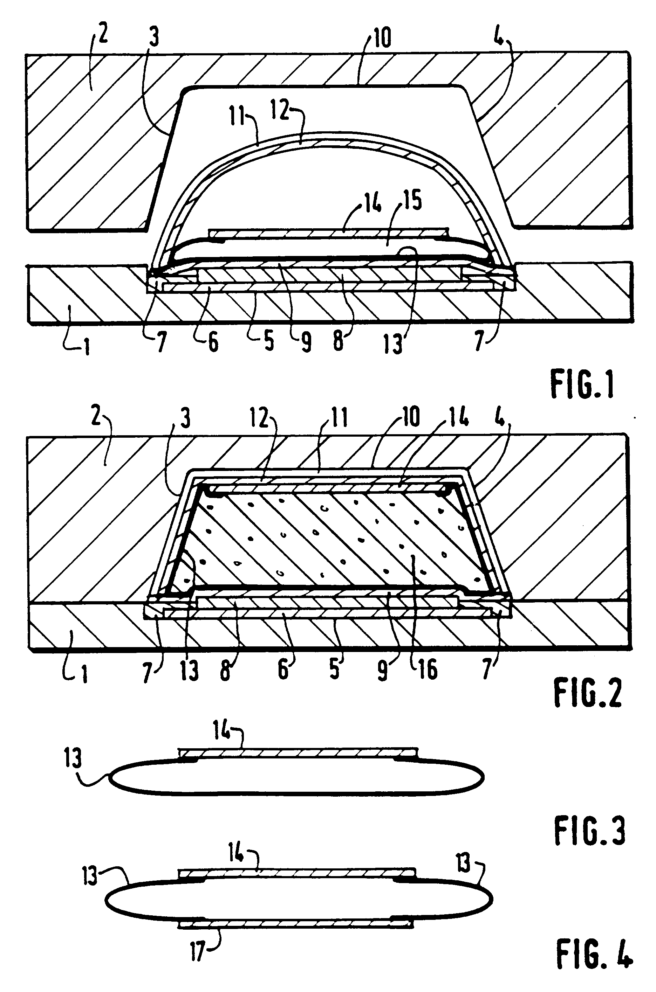

On positionne au dessus de cette première demi-enveloppe un élément tubulaire caractéristique de l'invention, représenté en détail dans la figure 3, constitué respectivement par une lame rigide supérieure (14), par exemple réalisée en ZICRAL (marque déposée), et en outre par une enveloppe (13). Cette enveloppe (13) est constituée d'un mélange de polyuréthane et d'un polyéther bloc amide. Cette enveloppe (13) est solidarisée à la lame rigide (14) au niveau des bords latéraux de cette dernière, et ce notamment par collage ou soudage par exemple.

Cette enveloppe (13) est souple, étirable et déformable. Elle est en outre étanche et susceptible de révéler par une élévation de température, des propriétés d'adhérence, notamment avec la résine de pré-imprégnation de l'élément de renfort (9), mais également, comme il sera dit ultérieurement, avec la résine de pré-imprégnation de l'élément de renfort (12). En outre, ces propriétés d'adhérence sont susceptibles d'être révélées avec le noyau en mousse, par l'exothermie résultant de l'expansion des composants du polyuréthane injectés dans l'élément tubulaire.

Cet élément tubulaire est à son tour recouvert d'une demi-enveloppe supérieure, constituée tout d'abord d'un second élément de renfort (12), également réalisé par une nappe textile unidirectionnelle pré-imprégnée de résine époxyde sans solvant, surmontée par un décor (11), par exemple réalisé en ABS. Cette demi-enveloppe supérieure, bien que relativement souple, développe une certaine rigidité à froid, de sorte qu'elle est maintenue en forme légèrement arquée par la coopération de ses extrémités latérales avec les parois (3 et 4) latérales du moule.

De la sorte, un espace intérieur (15) est créé entre les deux demi-enveloppes respectivement inférieure et supérieure.

La plaque (14) peut éventuellement être pré-positionnée par pré-collage en dessous et contre l'élément de renfort (12) de la demi-enveloppe supérieure.

On procède alors à la fermeture du moule ; on chauffe celui-ci, et corrélativement, on procède à l'injection des constituants d'une mousse de polyuréthane, à savoir un polyol et un isocyanate, à l'intérieur de l'élément tubulaire défini par la plaque supérieure rigide (14) et l'enveloppe (13). De manière connue, ces constituants s'expansent in situ en développant une réaction exothermique, provoquant le placage tout d'abord de la plaque rigide (14) contre la demi-enveloppe supérieure (11,12), puis toujours sous l'action de cette expansion, le placage de la demi-enveloppe supérieure (11,12) contre les parois supérieure (10) et latérales (3,4) du moule, venant ainsi conférer à la structure finale sa forme définitive.

Ce placage est rendu possible par l'étanchéité de l'élément tubulaire (13,14), interdisant à la mousse en expansion d'une part, de venir en contact avec les éléments de renfort (9 et 12) et d'autre part, de les traverser.

En outre, et de manière avantageuse, on fait subir aux deux surfaces exterieure et intérieure de la plaque rigide (14) un traitement de préparation au collage, afin d'assurer, lors du placage de cette lame contre la demi-enveloppe supérieure (11,12), une adhérence entre ces deux éléments, et entre la plaque (14) et la mousse de polyuréthane.

Ce traitement de préparation peut consister en un traitement électrochimique, et notamment une anodisation destinée à créer une couche d'oxyde microporeuse et rugueuse à sa surface, afin de faciliter le collage de la mousse de polyuréthane.

Compte-tenu du fait que l'enveloppe (13) sous l'action de la température développe également des propriétés d'adhérence, d'une part vis à vis de la résine époxyde de pré-imprégnation des éléments de renfort (9,12), et d'autre part, vis à vis du noyau en mousse de polyuréthane (16), cela confère à la structure finale une très grande cohésion, limitant voire annulant tous risques de délaminage.

Afin d'optimiser le rôle de renfort mécanique de la plaque (14), il convient que ses dimensions, notamment sa largeur corresponde sensiblement à la largeur de la partie supérieure du moule (10), au jeu des épaisseurs de la demi-enveloppe supérieure près.

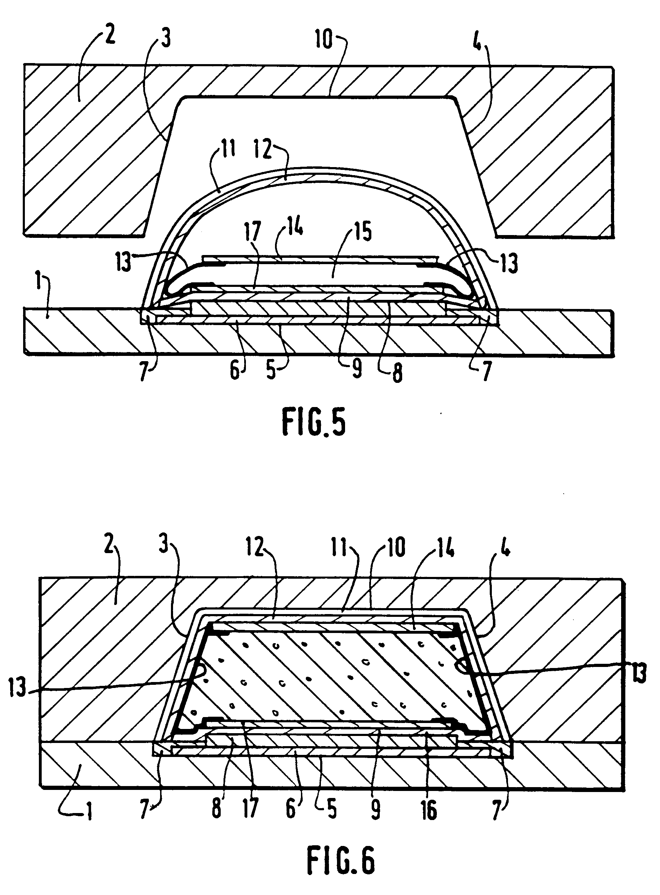

Dans un autre mode de réalisation représenté dans les figures 4,5 et 6, l'élément tubulaire est constitué d'une part d'une plaque supérieure (14) également réalisée en ZICRAL ou en stratifié pré-polymérisé ou encore en plaque de résine durcie, notamment mélaminique ou phénolique, mais également une plaque inférieure (17) de même nature, les deux plaques (14,17) étant reliées entre elles au niveau de leurs bords latéraux par des éléments souples (13) de même nature que précédemment décrit, également solidarisés sur les bords de l'élément (14) et de l'élément (17), soit par collage soit par soudage.

Sa mise en place et le procédé de réalisation de la structure restent conformes à ceux précédemment décrits. Cette structure particulière permet d'augmenter la rigidité de la structure finale obtenue ainsi que son équilibrage par rapport à la fibre neutre, de par la présence de cette plaque inférieure supplémentaire de rigidification.

Le procédé ainsi décrit permet de favoriser l'automatisation des chaînes de fabrication dans la mesure où on aboutit à la suppression des pré-collages entre la lame de ZICRAL ou la lame rigide et les renforts tissus. Corrélativement, il confère à la structure obtenu et notamment au ski, une très grande cohésion particulièrement recherchée pour ses applications.

## Revendications

1. Procédé pour la fabrication d'une structure moulée complexe, constituée par un noyau de mousse en matière plastique (16), et sur sa périphérie par deux demi-enveloppes respectivement supérieure (11,12) et inférieure (6,8,9), qui consiste :
- à déposer dans un moule (1,2) un premier élément (6,7,8,9), destine à former la demi-enveloppe inférieure,
- à déposer sur ce premier élément (6,8,9) un élément tubulaire déformable (13,14,17) ;
- à déposer au dessus de cet élément tubulaire déformable (14) un second élément (11,12), destiné à former la demi-enveloppe supérieure,
- à fermer le moule,
- à injecter dans l'élément tubulaire déformable (13,14,17) des réactifs destinés à réagir pour former une mousse qui s'expanse in-situ jusqu'à venir plaquer l'élément (11,12) contre les parois (3,4,10) du moule,
- à refroidir le contenu du moule,
- et enfin à ouvrir le moule pour retirer la structure moulée complexe ainsi obtenue,
caractérisé en ce qu'au moins la partie supérieure de l'élément tubulaire déformable est rigide (14).

2. Procédé selon la revendication 1, caractérisé en ce que l'élément tubulaire (13,14) est fermé par une enveloppe souple, déformable et étirable (13) joignant les deux bords latéraux de la partie supérieure rigide (14).

3. Procédé selon l'une des revendications 1 et 2, caractérisé en ce que la fixation de l'enveloppe souple, déformable et étirable (13) sur la partie supérieure rigide (14) s'effectue par collage, par soudage, par pincement, par clipsage, ou par boutonnage.

4. Procédé selon l'une des revendications 1 à 3, caractérisé en ce que la partie supérieure (14) et la partie inférieure (17) de l'élément tubulaire sont constituées de plaques rigides, reliées entre elles par deux éléments souples, déformables et étirables (13), fixés au niveau des bords latéraux desdites parties.

5. Procédé selon l'une des revendications 1 à 4, caractérisé en ce que les parties rigides (14,17) sont réalisées en un matériau choisi dans le groupe constitué par un métal, un alliage métallique, une plaque de stratifié prépolymérisée, une plaque de résine durcie, une plaque de papier durcie à la résine phénolique ou mélamine, une feuille de bois déroulée.

6. Procédé selon l'une des revendications 1 à 5, caractérisé en ce que l'élément souple, déformable et étirable (13) est réalisé en un matériau choisi dans le groupe constitué par les polyuréthanes thermoplastiques, les polyéthers bloc amides et les polyéthers bloc amide modifiés nitriles ou un mélange de ces produits.

7. Structure moulée complexe constituée par un noyau de mousse en matière plastique (16), et sur sa périphérie par deux demi-enveloppe respectivement supérieure (11, 12) et inférieure (6, 8, 9) la structure moulée étant obtenue par la mise en oeuvre du procédé selon l'une des revendications 1 à 6, caractérisée en ce que le noyau de mousse en matière plastique (16) est séparé des demi-enveloppes respectivement supérieure (11, 12) et inférieure (6, 8, 9) par un élément (13, 14) adhérent à ce dernier et aux deux demi-enveloppes, comportant au moins une plaque supérieure rigide (14) intercalée entre ledit noyau (16) et la demi-enveloppe supérieure (11, 12), et un film souple (13) sur au moins les deux cotés ou chants de la structure.

## Claims

1. Process for the manufacture of a complex moulded structure, constituted by a foam core (16) made from plastic and on its periphery by two, respectively upper (11, 12) and lower (6, 8, 9) half-shells which consists in :
- depositing in a mould (1, 2) a first element (6, 7, 8, 9) intended to form the lower half-shell;
- depositing on this first element (6, 8, 9) a deformable tubular element (13, 14, 17);
- depositing on top of this deformable tubular element (14) a second element (11, 12) intended to form the upper half-shell;
- closing the mould;
- injecting into the deformable tubular element (13, 14, 17) reactants intended to react in order to form a foam which expands in situ until pressing the element (11, 12) against the walls (3, 4, 10) of the mould;
- cooling the contents of the mould;
- and finally opening the mould in order to withdraw the complex moulded structure thus obtained;
characterised in that at least the upper portion of the deformable tubular element (14) is rigid.

2. Process according to claim 1, characterised in that the tubular element (13, 14) is closed by a flexible, deformable and stretchable shell (13) joining up the two lateral edges of the rigid upper portion (14).

3. Process according to one of claims 1 and 2, characterised in that the attachment of the flexible, deformable and stretchable shell (13) to the rigid upper portion (14) is carried out by adhesive bonding, by welding, by clamping, by dipping or by buttoning.

4. Process according to one of claims 1 to 3, characterised in that the upper portion (14) and the lower portion (17) of the tubular element consist of rigid plates joined together by two flexible, deformable and stretchable elements (13) attached in the region of the lateral edges of the said portions.

5. Process according to one of claims 1 to 4, characterised in that the rigid portions (14, 17) are produced from a material chosen from the group constituted by a metal, a metal alloy, a pre-polymerised laminate, a cured-resin plate, a plate made from paper and cured using phenolic or melamine resin, a sheet of wood veneer.

6. Process according to one of claims 1 to 5, characterised in that the flexible, deformable and stretchable element (13) is made from a material chosen from the group constituted by thermoplastic polyurethanes, polyetheramide block copolymers and nitrile-modified polyetheramide block copolymers or a mixture of these substances.

7. Complex moulded structure constituted by a foam core (16) made from plastic, and on its periphery by two, respectively upper (11, 12) and lower (6, 8, 9) half-shells, the moulded structure being obtained by the implementation of the process according to one of claims 1 to 6, characterised in that the plastic foam core (16) is separated from the respectively upper (11, 12) and lower (6, 8, 9) half-shells by an element (13, 14) adhering to the latter and to both half-shells, comprising at least one rigid upper plate (14) interposed between said core (16) and the upper half-shell (11, 12) and a flexible film (13) on at least the two side walls or edges of the structure.

## Patentansprüche

1. Verfahren zur Herstellung einer geformten komplexen Struktur, die aus einem Kern (16) aus einem Schaum aus Kunststoffmaterial und an ihrer Außenseite aus zwei jeweils oberen (11,12) und unteren (6,8,9) halben Hüllen gebildet ist, welches in folgendem besteht:
- im Ablagern eines ersten, zur Bildung der unteren halben Hülle bestimmten Elementes (6,7,8,9) in der Gießform (1,2),
- im Ablagern eines verformbaren Schlauchelementes (13,14, 17) auf dem ersten Element (6,8,9);
- im Ablagern eines zweiten, zur Bildung der oberen halben Hülle bestimmten Elementes (11,12) auf diesem Schlauchelement (14),
- im Schließen der Gießform,
- im Einspritzen von Reaktionsteilnehmern in das verformbare Schlauchelement (13,14,17), die dazu bestimmt sind, zur Bildung eines Schaumes miteinander zu reagieren, der sich in situ ausdehnt, bis er das Element (11,12) gegen die Wandungen (3,4,10) der Gießform anlegt,
- im Abkühlen des Inhaltes der Gießform
- und schließlich im Öffnen der Gießform, um die so erhaltene geformte komplexe Struktur herauszuziehen,
dadurch gekennzeichnet, daß wenigstens der obere Abschnitt des verformbaren Schlauchelementes (14) starr ist.

2. Verfahren nach Anspruch 1, dadurch gekennzeichnet, daß das Schlauchelement (13,14) durch eine biegsame, verformbare und streckbare Hülle (13) geschlossen ist, welche die beiden Seitenränder des starren oberen Abschnittes (14) miteinander verbindet.

3. Verfahren nach einem der Ansprüche 1 und 2, dadurch gekennzeichnet, daß die Befestigung der biegsamen, verformbaren und streckbaren Hülle (13) am starren oberen Abschnitt (14) durch Klebung, durch Verschweißung, durch Quetschung, Klemmung oder durch Ineinanderknöpfen erfolgt.

4. Verfahren nach einem der Ansprüche 1 bis 3, dadurch gekennzeichnet, daß der obere Abschnitt (14) und der untere Abschnitt (17) des Schlauchelementes von starren Platten gebildet sind, die untereinander durch zwei biegsame, verformbare und streckbare Elemente (13) verbunden sind, die in Höhe der Seitenränder dieser Abschnitte befestigt sind.

5. Verfahren nach einem der Ansprüche 1 bis 4, dadurch gekennzeichnet, daß die starren Teile (14,17) aus einem aus der von Metall, einer Metallegierung und einer vorpolymerisierten Schichtplatte, einer Platte aus gehärtetem Harze, einer Platte aus mit Phenol- oder Melaminharz gehärtetem Papier oder einem geschälten Holzblatt bestehenden Gruppe ausgewählten Material ausgeführt sind.

6. Verfahren nach einem der Ansprüche 1 bis 5, dadurch gekennzeichnet, daß das biegsame, verformbare und streckbare Element (13) aus einem Material gebildet ist, das aus der aus thermoplastischen Polyurethanen, Polyäther-Blockamiden und nitrilmodifizierten Polyäther-Blockamiden oder einer Mischung dieser Produkte bestehenden Gruppe ausgewählt ist.

7. Geformte, komplexe Struktur, die aus einem Kern (16) aus einem Schaum aus Kunststoffmaterial und an ihrer Außenseite aus zwei jeweils oberen (11, 12) und unteren (6, 8, 9) halben Hüllen gebildet ist, welche geformte Struktur aus der Durchführung des Verfahrens nach einem der Ansprüche 1 bis 6 erhalten ist, dadurch gekennzeichnet, daß der Kern (16) aus einem Schaum aus Kunststoffmaterial von den beiden jeweiligen oberen (11, 12) und unteren (6, 8, 9) halben Hüllen durch ein an letzterem und an den beiden halben Hüllen anhaftendes Element (13, 14) gesondert ist, das zumindest eine obere starre Platte (14) aufweist, welche zwischen den Kern (16) und die obere halbe Hülle (11, 12) zwischengeschaltet ist, sowie einen biegsamen Film (13) wenigstens an den beiden Seiten bzw. Kanten der Struktur.
